# EUROPEAN PATENT APPLICATION

(11) **EP 4 807 194 A1**
(43) Date of publication of application: **16.09.2026**
(21) Application number: 25425011.1
(22) Date of filing: 14.03.2025
(51) Int. Cl.: F15B 9/12, B64C 13/40

(54) **ACTUATOR INSTALLATION SYSTEM**

(71) Applicant: Microtecnica S.r.l., 10126 Turin (IT)
(72) Inventor: Molinelli, Dario, Carnate, MB 20866 (IT)
(74) Representative: Casalonga

(57) **Abstract**

An actuator system (200) of an aircraft, including an actuator housing (205), an input lever (206), a piston (204) and a valve member (114). The input lever receives an input from a pilot and is pivotably mounted on the actuator housing. The input lever actuates the valve member to selectively control a flow of a pressurised hydraulic fluid based on the input. The flow of the pressurised hydraulic fluid and the input lever move the piston based on the input. The piston actuates a flight surface of the aircraft. The actuator system also includes a removeable coupling bar (224) connected to the actuator housing and a central portion (212) of the input lever. The removeable coupling bar substantially prevents motion of the piston when attached to the actuator housing and the input lever, and is removed when the actuator system is installed in the aircraft.

## Description

### FIELD

The present disclosure relates to an actuator system, e.g. a hydraulically assisted actuator of an aircraft, in particular for installation of an actuator in an aircraft.

### BACKGROUND

Hydraulically assisted actuators are designed to amplify a mechanical input force and may be used in mechanical systems in aircraft. When installing an actuator in an aircraft, it may be useful to install it whilst the hydraulics are turned on, in order to connect the actuator to the various parts of the aircraft.

In present actuator systems, the actuator system may be disabled at a rigging point on only one side of the actuator. This loads the actuator system with an unsymmetrical force, and can lead to the actuator breaking when installing it with the hydraulics of the aircraft turned on. Thus, it is desired to provide an actuator that can be installed in an aircraft during operation of a hydraulic system, which may improve the ease of installation.

### SUMMARY

According to the present disclosure, there is provided an actuator system of an aircraft, the actuator system comprising:
an actuator housing;
an input lever for receiving an input from a pilot;
a piston for actuating a flight surface of the aircraft;
   wherein the piston is mounted in the actuator housing;
   wherein the piston is arranged to be moved reciprocally within the actuator housing; and
   wherein the input lever is pivotably mounted on the actuator housing;
wherein the actuator system further comprises:
   a valve member connected to the input lever;
   wherein the input lever is arranged to actuate the valve member for selectively controlling a flow of a pressurised hydraulic fluid based on the input;
   wherein the actuator housing and the valve member are arranged such that the flow of the pressurised hydraulic fluid selectively acts on the piston;
wherein the input lever comprises:
   a central portion;
   a first arm; and
   a second arm;
      wherein the first arm and the second arm are each connected to the central portion;
      wherein the first arm and the second arm extend on either side of the actuator housing and are each connected to the piston;
      wherein the flow of the pressurised hydraulic fluid, the first arm and the second arm are arranged to move the piston based on the input;
wherein the actuator system further comprises:
   a removeable coupling bar arranged to be connected to the actuator housing and the central portion of the input lever;
   wherein the removeable coupling bar is arranged to substantially prevent motion of the piston when attached to the actuator housing and the input lever; and
   wherein the removeable coupling bar is arranged to be removed when the actuator system is installed in the aircraft.

Also according to the present disclosure, there is provided a method of installing an actuator system in an aircraft, the actuator system comprising:
an actuator housing;
an input lever for receiving an input from a pilot;
a piston for actuating a flight surface of the aircraft;
   wherein the piston is mounted in the actuator housing
   wherein the piston is arranged to be moved reciprocally within the actuator housing; and
   wherein the input lever is pivotably mounted on the actuator housing; and
wherein the actuator system further comprises:
   a valve member connected to the input lever;
   wherein the input lever is arranged to actuate the valve member for selectively controlling a flow of a pressurised hydraulic fluid based on the input;
      wherein the actuator housing and the valve member are arranged such that the flow of the pressurised hydraulic fluid selectively acts on the piston;
wherein the input lever comprises:
   a central portion;
   a first arm; and
   a second arm;
      wherein the first arm and the second arm are each connected to the central portion;
      wherein the first arm and the second arm extend on either side of the actuator housing and are each connected to the piston;
      wherein the flow of the pressurised hydraulic fluid, the first arm and the second arm are arranged to move the piston based on the input;
wherein the actuator system further comprises:
   a removeable coupling bar arranged to be connected to the actuator housing and the central portion of the input lever;
   wherein the method comprises:
      attaching the removeable coupling bar between the actuator housing and the central portion of the input lever to substantially prevent motion of the piston;
      installing the actuator system in the aircraft; and
      removing the removeable coupling bar.

It will be appreciated that the features described herein apply equally to the system and method.

In some examples, the removeable coupling bar is arranged to hold the piston at a position halfway between a minimum stroke position (fully retracted) and a maximum stroke position (fully extended), when the removeable coupling bar is attached to the actuator housing and the input lever.

In some examples, the actuator system comprises:
a first removeable pin; and
a second removeable pin;
   wherein the first removeable pin is arranged to attach the removeable coupling bar to the central portion via the first rigging hole; and
   wherein the second removeable pin is arranged to attach the removeable coupling bar to the actuator housing via the second rigging hole; and
   wherein the first and second removeable pins are arranged to be removed when the actuator system is installed in the aircraft.

In some examples, the input lever is arranged to be attached to (e.g. the chassis of) the aircraft using the first rigging hole. This may allow the input lever to be connected to the aircraft, whilst providing a rigging point that may be far from the moving end of the piston.

For example, the input lever may be connected to the aircraft via the first rigging hole in the central portion of the input lever. Thus, the first removeable pin may be removed and replaced with a first aircraft coupling to connect the input lever to the aircraft. For example, the first removeable pin may be pushed out by the first aircraft coupling via the first rigging hole. The first aircraft coupling may still hold the removeable coupling bar in place, such that the piston remains substantially stationary (e.g. even if the hydraulic system of the aircraft is attached to the actuator system and turned on) and the piston can be attached to the aircraft.

Once the piston and the input lever are attached to the aircraft, the second removeable pin and the removeable coupling bar may then be removed from the actuator system and the aircraft, and the piston and input lever may move freely.

In some examples, the actuator housing is arranged to be attached to (e.g. the chassis of) the aircraft using the second rigging hole. The actuator housing may be connected to the aircraft via the second rigging hole, e.g. by the second removeable pin being removed and replaced with a second aircraft coupling to connect the actuator housing to the aircraft.

In some examples, the actuator system comprises:
a first feedback flange; and
a second feedback flange;
   wherein the first feedback flange is connected to the first arm of the input lever and the piston;
   wherein the second feedback flange is connected to the second arm of the input lever and the piston; and
   wherein the first and second feedback flanges extend symmetrically on either side of the actuator housing to connect the first and second arms to the piston.

In some examples, the input lever is arranged to pivot about a pivot point on the actuator housing (e.g. the input lever is pivotably mounted on the actuator housing, e.g. at the pivot point), and the central portion is arranged on the opposite side of the pivot point to the piston. For example, the central portion may be arranged to be moved in the opposite direction from the piston, e.g. owing to the pivotable mounting of the input lever and the location of the pivot point.

In some examples, the piston is mounted (e.g. for reciprocal motion) in a fluid chamber in the actuator housing, wherein the fluid chamber comprises a first side and a second side;
wherein the valve member is arranged to selectively direct the flow of the pressurised hydraulic fluid to the first side or the second side depending on the direction of movement of the input lever; and
wherein the flow of the pressurised hydraulic fluid to the first side moves the piston in a first direction, and the flow of the pressurised hydraulic fluid to the second side moves the piston in a second direction;
wherein the first direction and the second direction are opposite (from each other). This may allow the pressurised hydraulic fluid to move the piston in the same direction as the input lever, thus amplifying the force on the piston.

In some examples, the valve member is arranged to be moved in the opposite direction from the piston. For example, the valve member may be connected to the opposite side of the pivot point to the piston and/or the hydraulic fluid may be connected (e.g. through the actuator housing) so to act on the piston, to move the piston in in the opposite direction from the valve member.

In some examples, the piston is arranged to be connected to a helicopter blade when the actuator system is installed in the aircraft. This may allow the actuator system to be used to adjust the pitch of the helicopter blades when installed in the aircraft.

### BRIEF DESCRIPTION OF THE FIGURES

One or more non-limiting examples will now be described, by way of example only, with reference to the accompanying figures, in which:
Figure 1 shows a perspective view of an actuator system;
Figure 2 shows a schematic view of an actuator system;
Figure 3 shows a perspective view of an actuator system including an installation system;
Figure 4 shows a close-up view of the actuator system shown in Figure 3; and
Figure 5 shows a close-up view of the actuator system shown in Figure 3.

### DETAILED DESCRIPTION

The examples of an actuator system described herein may be used in an aircraft, e.g. the actuator system could be installed in a helicopter for actuating the helicopter blades. Other applications, however, are also envisaged and the examples are not limited to this.

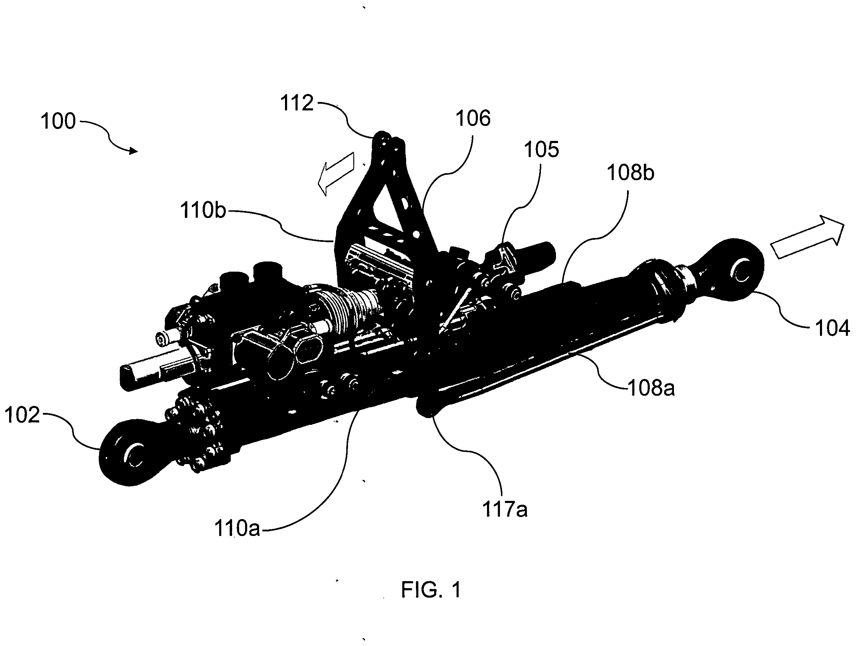

Figure 1 shows an actuator system 100, including an input lever 106, a piston 104 and an actuator housing 105. The piston 104 moves reciprocally within the actuator housing 105, along a central axis of the actuator. The input lever 106 is mounted on, and pivots about, the actuator housing 105 to actuate the piston 104. The input lever 106 moves in the opposite direction to the piston 105, as shown by the arrows in Figure 1. The actuator system includes a fixed end 102, which is stationary relative to the piston 105 and the input lever 106. For example, the fixed end 102 may be attached to the chassis of the aircraft.

The input lever 106 includes a central portion 112, which is symmetrically connected to a first arm 110a and a second arm 110b, in a 'wishbone' formation. The first arm 110a and the second arm 110b are connected to a first feedback flange 108a and a second feedback flange 108b respectively, at a first connection point 217a and a second connection point (out of sight) respectively. The first and second feedback flanges 108a, b are connected to the piston 105, to transmit the force from movement of the input lever 106 to the piston 105.

When the actuator system 100 is installed in an aircraft (not shown), an input from the pilot (e.g. via a linkage from the pilot controls) is used to generate an input force that acts on the central portion 112 of the input lever 106. This input force is transmitted to the piston 104, which transmits a force onto a flight surface (not shown) of the aircraft. Thus, when the actuator system 100 is installed in the aircraft, the fixed end 102, the piston 104, and the input lever 106 are connected to the aircraft.

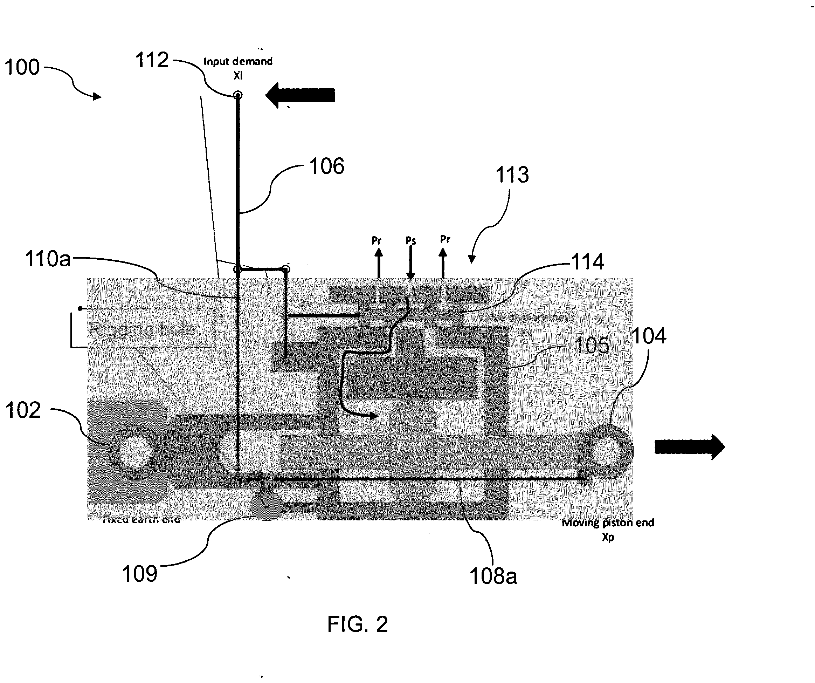

The input lever 106 is also hydraulically assisted, as described with reference to Figure 2. Figure 2 shows a schematic cross-section of the actuator system 100 shown in Figure 1.

A hydraulic system 113 of the actuator system 100 includes a valve member 114 connected to the input lever 106. Movement of the input lever 106 by the input force at the central portion 112 of the input lever 106 also causes the valve member 114 to move in the same direction as the input lever 106.

The valve member 114 controls a flow of pressurised hydraulic fluid into the actuator housing 105, such that the pressurised hydraulic fluid acts on the piston 104. For example, when the actuator system 100 is connected to the aircraft, the actuator housing 105 is connected to a hydraulic system (not shown) of the aircraft. The direction of movement of the valve member 114 controls the flow direction of the pressurised hydraulic fluid through the actuator housing, and thus the direction of the force of the pressurised hydraulic fluid on the piston 104. The force of the pressurised hydraulic fluid on the piston 104 is in the same direction as the force from the input lever 104 via the first and second feedback flanges 108a, 108b, such that the pressurised hydraulic fluid amplifies the force from the input lever 106.

However, if the hydraulic system of the aircraft is turned on when the actuator system 100 is being installed in the aircraft (and the actuator system 100 is connected to the hydraulic system), the input lever 106 and the piston 104 could be moved during installation, which could lead to damage or breakage of the actuator system.

In conventional actuator systems, the input lever 106 may be held in place during installation by a conventional rigging hole 109, which is positioned at the bottom of the input lever 106 on the first arm 110a. A pin may be positioned in the conventional rigging hole 109 to hold the input lever 106 stationary relative to the actuator housing 105.

However, this may not be strong enough to hold the input lever 106 in place. Furthermore, as the conventional rigging hole 109 is holding the input lever 106 at the first arm 110a (and possibly not also the second arm 110b), and the input force is applied to the central portion 112, the input lever 106 and/or pin may bend if the hydraulic system acts to move the input lever 106 and piston 104 during installation of the actuator system, owing to an unsymmetrical force being applied to the input lever 106. This could damage the input lever 106, the first feedback flange 108a and the pin, and could make it difficult to remove the pin to install the actuator system in the aircraft.

Additionally, the location of the conventional rigging hole 109 may make it difficult to hold the input lever 106 and thus the piston 104 in a particular position for installation in the aircraft.

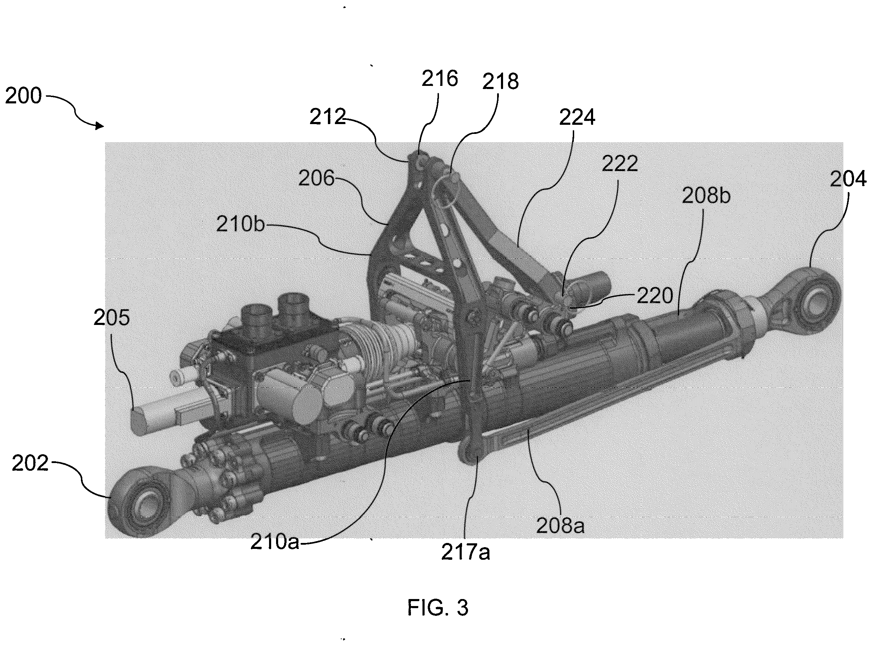

Figure 3 shows a perspective view of an actuator system 200 including a removeable coupling bar 224. The actuator system 200 is similar to the actuator system 100 shown in Figures 1 and 2, but instead of a conventional rigging hole 109, the removeable coupling bar 224 is connected between the actuator housing 205 and the central portion 212 of the input lever 206.

The input lever 206 includes a first rigging hole 216 in the central portion 212, and the actuator housing 205 includes a second rigging hole 220. The second rigging hole 220 is on the same side of the actuator housing 205 as the piston 204. The removeable coupling bar 224 is connected to the first and second rigging holes 216, 220 via first and second removeable pins 218, 222.

The removeable coupling bar 224 holds the input lever 206 in place, by substantially preventing the input lever 206 from pivoting about the actuator housing 205. This allows the actuator system 200 to be connected to the hydraulic system of the aircraft during installation of the actuator system 200, without the input lever 206 being substantially moved by the hydraulic system (i.e. via the valve member acting on the input lever 206).

Furthermore, because the input lever 206 is held by the removeable coupling bar 224 at the central portion 212, and the input force is also applied to the central portion 212, the load on the input lever 206 may be symmetrical, which may prevent damage to the input lever 206 and the first feedback flange 208a.

The first and second rigging holes 216, 220 connect to the removeable coupling bar 224 such that the input lever 206 is held in a specific position. For example, the positions of the first and second rigging holes 216, 220 may be selected such that the input lever 206 is held in a position corresponding to a half-stroke of the piston by the removeable coupling bar 224, e.g. such that the piston 204 is installed in the aircraft at a position halfway between its minimum and maximum stroke positions.

The actuator system 200 may be connected to the aircraft via the first rigging hole 216 and the end of the piston 204. Thus, in order to install the actuator system 200 in the aircraft, the first and second removeable pins 218, 222 are slid out of the first and second rigging holes 216, 220, and the removeable coupling bar is removed.

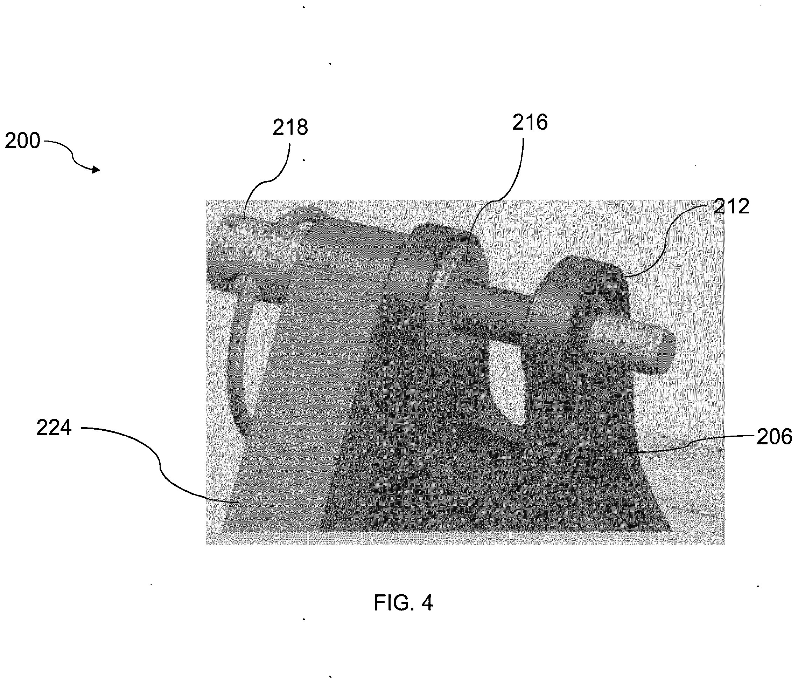

Figures 4 shows a close-up view of the first rigging hole 216 and first removeable pin 218 shown in Figure 3. During installation of the actuator system 200 in the aircraft, the first removeable pin 218 may be removed from the first rigging hole 216, and replaced with a first aircraft coupling (not shown). The first removeable pin 218 may be removed by pushing the first aircraft coupling through the opposite side of the central portion 212 to the removeable coupling bar 224, thus allowing the first removeable pin 218 to be pushed out of the input lever 206 and removeable coupling bar 224, without removing the removeable coupling bar 224. This allows the input lever 206 to be connected to the aircraft (e.g. to the pilot controls (not shown)) without moving the removeable coupling bar 224, thus allowing the piston to remain fixed in place until the removeable coupling bar 224 is removed, e.g. to allow the piston 204 to be attached to a flight surface (not shown) of the aircraft after the input lever 206.

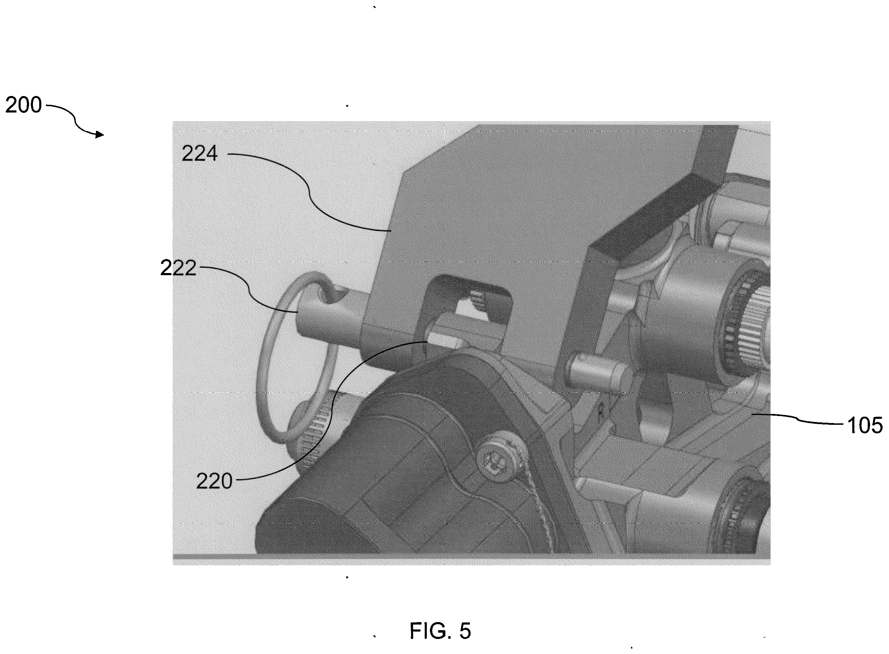

Figure 5 shows a close-up view of the second rigging hole 220 and second removeable pin 222 shown in Figure 3. The second removeable pin 222 may be removed when the input lever 206 and the piston 204 have been attached to the aircraft, such that the second removeable pin 222 and the removeable coupling bar 224 may be removed from the actuator system 202 and the input lever 206 is able to pivot about the actuator housing 205.

During operation of the actuator system 200 in the aircraft, the input lever 206 transmits the input from the pilot to the piston 204 via the first and second arms. Furthermore, the input lever 206 operates the valve member, such that movement of the piston 204 may be amplified by the pressurised hydraulic fluid, because the forces acting on the piston from the first and second arms 210a, 210b and the pressurised hydraulic fluid are in the same direction.

When installing such an actuator system 200 in an aircraft, the hydraulic system of the aircraft may be turned on, such that the piston 204 could be moving during installation (i.e. the valve member may be acting upon the input lever 206 during installation, thereby moving the piston 204). However, in order to correctly install the actuator system 200 in the aircraft, the input lever 206 and thus the piston 204 should be substantially held in place, such that the piston 204 can be attached to the relevant flight surface and the input lever 206 can be attached to the relevant control system used by the pilot (e.g. via a linkage from the pilot controls).

Thus, it will be seen that according to the present disclosure, the removeable coupling bar 224 is connected between the pivotable input lever 206 and the actuator housing 205, where the actuator housing is stationary relative to the movement of the input lever 206 and the piston 204. The input lever 206 pivots about the actuator housing 205 to actuate the piston 204, and thus by preventing the input lever 206 from moving, the removeable coupling bar 224 holds the piston 204 in the same position during installation. Thus, even were an input force to be applied to the input lever 206 during installation (e.g. via a hydraulic system of the aircraft), the piston 204 is prevented from moving.

It will be appreciated by the skilled person that owing to manufacturing tolerances, there may be some play in the actuator system 200. For example, there may be a small gap between the first removeable pin 218 and the first rigging hole 216 owing to manufacturing tolerances, such that the input lever 206 may be able to move slightly. For example, during the installation of the actuator system 200 in the aircraft, an unintended force may be applied to the valve member 114 via the input lever 206 (e.g. owing to movement between internal bearings (not shown) of the actuator system).

Thus, the input lever 206 may be able to move slightly relative to the removeable bar 224, and direct the flow of the pressurised hydraulic fluid into the actuator housing 205, to produce a small, unintended force on the piston 204, thereby slightly moving the piston 204. However, because the central portion 212 remains in substantially the same place during this slight movement (owing to the placement of the removeable coupling bar 224 and first and second removeable pins 218, 222), the input lever 206 is not subjected to unexpected loads that could compromise the structural integrity of the actuator system 200 (e.g. the integrity of the first and second removable pins 218, 222 and the first and second arms 210a, b). This also means that the piston 204 only moves a small amount as a result of the unintended force, which may be compatible with the positional uncertainty tolerated by the aircraft manufacturer.

This movement of the piston 204 may also shift the first and second feedback flanges 208a, b via the respective connection points 217a, thereby returning the valve member 114 and the piston 204 to their original positions before the unintended force was applied, thus preventing further stress from being placed onto the input lever 206.

As the input lever 206 is for receiving an input from a pilot, the (e.g. central portion 212 of the) input lever is connected to the aircraft when the actuator system 200 is installed in the aircraft and the removeable coupling bar 224 is removed. For example, the central portion 212 of the input lever 206 may be arranged to receive the input from the pilot, e.g. via a linkage from the pilot controls.

As the removeable coupling bar 224 is connected to the central portion 212 of the input lever 206, the load on the actuator system 200 during installation is symmetrical. This may prevent the input lever 206 from breaking during installation of the actuator system 200, e.g. owing to an uneven load on the input lever 206.

This may also allow for the actuator system 200 to be installed in the aircraft with the piston 204 at a known stroke position. For example, the distance between the first and second rigging holes 216, 220 (e.g. and the length of the removeable coupling bar 224) may correspond to a particular stroke position of the piston 204, e.g. the piston 204 being fully retracted, or fully extended. This may allow the position of the piston 204 to be easily regulated during installation of the actuator system 200 in the aircraft.

Holding the piston 204 at the halfway stroke position may be useful when installing the actuator system 200 in the aircraft, because it may allow for the piston 204 to move in two directions from where it is fixed in the aircraft, e.g. a half-stroke range of movement. This may prevent the transfer of any stall load of the piston 204 being transferred onto parts of the actuator system (e.g. the input lever 206 and first and second feedback flanges 208a, b) that are not able to withstand such loads, e.g. by introducing end stops in the input from the pilot.

The first and second removeable pins 218, 222 may allow for the removeable coupling bar 224 to be easily removed from the actuator system 200 when the actuator system 200 is installed in the aircraft, in order to allow the input lever 204 to pivot about the actuator housing 204.

The first and second feedback flanges 208a, 208b may allow the input lever 206 to be positioned in the centre of the actuator housing 205 whilst still being connected to the piston 205, rather than the end of the actuator housing. This may give the input lever 206 more stability.

## Claims

1. An actuator system of an aircraft, the actuator system comprising:
an actuator housing;
an input lever for receiving an input from a pilot;
a piston for actuating a flight surface of the aircraft;
wherein the piston is mounted in the actuator housing;
wherein the piston is arranged to be moved reciprocally within the actuator housing; and
wherein the input lever is pivotably mounted on the actuator housing;
wherein the actuator system further comprises:
a valve member connected to the input lever;
wherein the input lever is arranged to actuate the valve member for selectively controlling a flow of a pressurised hydraulic fluid based on the input;
wherein the actuator housing and the valve member are arranged such that the flow of the pressurised hydraulic fluid selectively acts on the piston;
wherein the input lever comprises:
a central portion;
a first arm; and
a second arm;
wherein the first arm and the second arm are each connected to the central portion;
wherein the first arm and the second arm extend on either side of the actuator housing and are each connected to the piston;
wherein the flow of the pressurised hydraulic fluid, the first arm and the second arm are arranged to move the piston based on the input;
wherein the actuator system further comprises:
a removeable coupling bar arranged to be connected to the actuator housing and the central portion of the input lever;
wherein the removeable coupling bar is arranged to substantially prevent motion of the piston when attached to the actuator housing and the input lever; and
wherein the removeable coupling bar is arranged to be removed when the actuator system is installed in the aircraft.

2. The actuator system as claimed in claim 1, wherein the central portion of the input lever comprises a first rigging hole;
wherein the actuator housing comprises a second rigging hole; and
wherein the removeable coupling bar is arranged to be connected between the first rigging hole and the second rigging hole to hold the piston at a particular stroke position.

3. The actuator system as claimed in claim 2, wherein the removeable coupling bar is arranged to hold the piston at a position halfway between a minimum stroke position and a maximum stroke position, when the removeable coupling bar is attached to the actuator housing and the input lever.

4. The actuator system as claimed in claim 2 or 3, wherein the actuator system comprises:
a first removeable pin; and
a second removeable pin;
wherein the first removeable pin is arranged to attach the removeable coupling bar to the central portion via the first rigging hole;
wherein the second removeable pin is arranged to attach the removeable coupling bar to the actuator housing via the second rigging hole; and
wherein the first and second removeable pins are arranged to be removed when the actuator system is installed in the aircraft.

5. The actuator system as claimed in claim 2, 3 or 4, wherein the input lever is arranged to be attached to the aircraft using the first rigging hole.

6. The actuator system as claimed in any one of the preceding claims, wherein the actuator system comprises:
a first feedback flange; and
a second feedback flange;
wherein the first feedback flange is connected to the first arm of the input lever and the piston;
wherein the second feedback flange is connected to the second arm of the input lever and the piston; and
wherein the first and second feedback flanges extend symmetrically on either side of the actuator housing to connect the first and second arms to the piston.

7. The actuator system as claimed in any preceding claim, wherein the central portion is arranged to receive the input from the pilot.

8. The actuator system as claimed in any one of the preceding claims, wherein the input lever is arranged to pivot about a pivot point on the actuator housing; and
wherein the central portion is arranged on the opposite side of the pivot point to the piston.

9. The actuator system as claimed in claim 8, wherein the central portion is arranged to be moved in the opposite direction from the piston.

10. The actuator system as claimed in claim 8 or 9, wherein the valve member is arranged to be moved in the opposite direction from the piston.

11. The actuator system as claimed in any one of the preceding claims, wherein the piston is arranged to be connected to a helicopter blade when the actuator system is installed in the aircraft.

12. The actuator system as claimed in any one of the preceding claims, wherein the piston is mounted in a fluid chamber in the actuator housing;
wherein the fluid chamber comprises a first side and a second side;
wherein the valve member is arranged to selectively direct the flow of the pressurised hydraulic fluid to the first side or the second side depending on the direction of movement of the input lever; and
wherein the flow of the pressurised hydraulic fluid to the first side moves the piston in a first direction, and the flow of the pressurised hydraulic fluid to the second side moves the piston in a second direction;
wherein the first direction and the second direction are opposite.

13. A method of installing an actuator system in an aircraft, the actuator system comprising:
an actuator housing;
an input lever for receiving an input from a pilot;
a piston for actuating a flight surface of the aircraft;
wherein the piston is mounted in the actuator housing
wherein the piston is arranged to be moved reciprocally within the actuator housing; and
wherein the input lever is pivotably mounted on the actuator housing; and
wherein the actuator system further comprises:
a valve member connected to the input lever;
wherein the input lever is arranged to actuate the valve member for selectively controlling a flow of a pressurised hydraulic fluid based on the input;
wherein the actuator housing and the valve member are arranged such that the flow of the pressurised hydraulic fluid selectively acts on the piston;
wherein the input lever comprises:
a central portion;
a first arm; and
a second arm;
wherein the first arm and the second arm are each connected to the central portion;
wherein the first arm and the second arm extend on either side of the actuator housing and are each connected to the piston;
wherein the flow of the pressurised hydraulic fluid, the first arm and the second arm are arranged to move the piston based on the input;
wherein the actuator system further comprises:
a removeable coupling bar arranged to be connected to the actuator housing and the central portion of the input lever;
wherein the method comprises:
attaching the removeable coupling bar between the actuator housing and the central portion of the input lever to substantially prevent motion of the piston;
installing the actuator system in the aircraft; and
removing the removeable coupling bar.
